(19) Europäisches Patentamt
European Patent Office
Office européen des brevets

(11) **EP 1 531 611 B1**

(12) **EUROPÄISCHE PATENTSCHRIFT**

(45) Veröffentlichungstag und Bekanntmachung des Hinweises auf die Patenterteilung:
**09.03.2011 Patentblatt 2011/10**

(51) Int Cl.:
***H04N 1/047*** *(2006.01)*

(21) Anmeldenummer: **04023858.6**

(22) Anmeldetag: **07.10.2004**

(54) **Vorrichtung und Verfahren zur Messung der Längenänderung der Vorschubspindel in einem Belichter für Druckvorlagen**

Apparatus and method for measuring the change in length of a driving spindle in an exposure printing apparatus

Appareil et procédé de mésure du changement de la longueur d'une broche dans un appareil d'impression à éxposition

(84) Benannte Vertragsstaaten:
**DE FR GB IT NL**

(30) Priorität: **13.11.2003 DE 10353029**

(43) Veröffentlichungstag der Anmeldung:
**18.05.2005 Patentblatt 2005/20**

(73) Patentinhaber: **Heidelberger Druckmaschinen Aktiengesellschaft**
**69115 Heidelberg (DE)**

(72) Erfinder:
• **Haushahn, Volker**
**24111 Kiel (DE)**
• **Melzer, Peter Klaus**
**24146 Kiel (DE)**
• **Schmidt, Stefan Dr**
**24159 Kiel (DE)**

(56) Entgegenhaltungen:
EP-A- 0 327 929      US-A1- 2001 012 042
US-A1- 2001 050 760      US-A1- 2003 058 420
US-B1- 6 283 019

EP 1 531 611 B1

**Beschreibung**

Die Erfindung bezieht sich auf das Gebiet der elektronischen Reproduktionstechnik und betrifft eine Vorrichtung zur Messung der Längenänderung der Vorschubspindel in einem Belichter für Druckvorlagen, insbesondere in einem Außentrommelbelichter, der Druckvorlagen auf Druckplatten aufzeichnet. Weiterhin betrifft die Erfindung ein Verfahren zur Messung der Längenänderung der Vorschubspindel und zur Korrektur der gemessenen Längenänderungen bei der Aufzeichnung der Druckvorlagen.

In der Reproduktionstechnik werden Druckvorlagen für Druckseiten erzeugt, die alle zu druckenden Elemente wie Texte, Grafiken und Bilder enthalten. Für den farbigen Druck wird für jede Druckfarbe eine separate Druckvorlage erzeugt, die alle Elemente enthält, die in der jeweiligen Farbe gedruckt werden. Für den Vierfarbdruck sind das die Druckfarben Cyan, Magenta, Gelb und Schwarz (CMYK). Die nach Druckfarben separierten Druckvorlagen werden auch Farbauszüge genannt. Die Druckvorlagen werden in der Regel gerastert und mit einem Belichter auf Filme belichtet, mit denen dann Druckplatten für das Drucken hoher Auflagen hergestellt werden. Alternativ können die Druckvorlagen in speziellen Belichtungsgeräten auch gleich auf Druckplatten belichtet werden oder sie werden direkt als digitale Daten an eine digitale Druckmaschine übergeben. Dort werden die Druckvorlagendaten dann beispielsweise mit einer in die Druckmaschine integrierten Belichtungseinheit auf Druckplatten belichtet, bevor unmittelbar anschließend der Auflagendruck beginnt.

Nach dem heutigen Stand der Technik werden die Druckvorlagen elektronisch reproduziert. Dabei werden Bilder in einem Farbscanner gescannt und in Form von digitalen Daten gespeichert. Texte werden mit Textverarbeitungsprogrammen erzeugt und Grafiken mit Zeichenprogrammen. Mit einem Layoutprogramm werden die Bild-, Text- und Grafik-Elemente zu einer Druckseite zusammengestellt. Nach der Separation in die Druckfarben liegen die Druckvorlagen dann in digitaler Form vor. Als Datenformate zur Beschreibung der Druckvorlagen werden heute weitgehend die Seitenbeschreibungssprachen Postscript und PDF (Portable Document Format) verwendet. Die Postscript- bzw. PDF-Daten werden vor der Aufzeichnung der Druckvorlagen in einem Raster-Image-Prozessor (RIP) in einem ersten Schritt in Farbauszugswerte für die Farbauszüge CMYK umgerechnet. Dabei entstehen für jeden Bildpunkt vier Farbauszugswerte als Tonwerte im Wertebereich von 0 bis 100%. Die Farbauszugswerte sind ein Maß für die Farbdichten, mit denen die vier Druckfarben Cyan, Magenta, Gelb und Schwarz auf dem Bedruckstoff gedruckt werden. In Sonderfällen, in denen mit mehr als vier Farben gedruckt wird (Schmuckfarben), ist jeder Bildpunkt durch so viele Farbauszugswerte beschrieben, wie es Druckfarben gibt. Die Farbauszugswerte können z.B. mit 8 bit je Bildpunkt und Druckfarbe als Datenwerte gespeichert sein, womit der Wertebereich von 0 % bis 100% in 256 Tonwertstufen unterteilt ist.

Die Daten mehrerer Druckseiten werden mit den Daten weiterer Elemente, wie Passkreuzen, Schnittmarken und Falzmarken sowie Druckkontrollfeldern, zu Druckvorlagen für einen Druckbogen zusammengefasst. Diese Druckbogendaten werden ebenfalls als Farbauszugswerte (CMYK) bereit gestellt.

Unterschiedliche Tonwerte eines zu reproduzierenden Farbauszugs lassen sich im Druck nur durch eine Flächenmodulation der aufgetragenen Druckfarben, d.h. durch eine Rasterung, wiedergeben. Die Flächenmodulation der Druckfarben kann beispielsweise nach einem Verfahren zur Punktrasterung erfolgen, bei dem die verschiedenen Tonwertstufen der Farbauszugsdaten in Rasterpunkte unterschiedlicher Größe umgewandelt werden, die in einem regelmäßigen Raster mit sich periodisch wiederholenden Rasterzellen angeordnet sind. Eine Rasterzelle für ein typisches 60er Raster umfasst ein Quadrat mit 1/60 cm Kantenlänge, d.h. eine Rasterzelle hat die Abmessungen 166 $\mu$m $\times$ 166 $\mu$m. Bei der Aufzeichnung der Farbauszüge auf eine Druckplatte werden die Rasterpunkte in den einzelnen Rasterzellen aus Belichtungspunkten zusammengesetzt, die um eine Größenordnung kleiner als die Rasterpunkte sind. Eine typische Auflösung der Belichtungspunkte ist beispielsweise 1000 Belichtungspunkte je Zentimeter, d.h. ein Belichtungspunkt hat die Abmessungen 10 $\mu$m $\times$ 10 $\mu$m. Die Umsetzung der Farbauszugswerte in Rasterpunkte geschieht in einem zweiten Schritt bei der weiteren Verarbeitung der Farbauszugsdaten im Raster-Image-Prozessor, wodurch die Farbauszugsdaten in hochaufgelöste Binärwerte mit nur zwei Helligkeitswerten (belichtet bzw. nicht belichtet) umgewandelt werden, die das Muster des modulierten Punktrasters bilden. Auf diese Weise werden die Druckvorlagendaten jedes Farbauszugs in Form einer hochaufgelösten Rasterbitmap beschrieben, die für jeden der Belichtungspunkte auf der Druckfläche ein Bit enthält, das angibt, ob dieser Belichtungspunkt zu belichten ist oder nicht.

In den Aufzeichnungsgeräten, die in der elektronischen Reproduktionstechnik zur Belichtung von Druckvorlagen und Druckformen eingesetzt werden, wird ein Belichtungsstrahl erzeugt, beispielsweise mit einer Laserdiode ein Laserstrahl, durch optische Mittel geformt und auf das Aufzeichnungsmaterial fokussiert und mittels eines Ablenksystems Punkt- und Linienweise über das Aufzeichnungsmaterial abgelenkt. Es gibt auch Aufzeichnungsgeräte, die zur Erhöhung der Belichtungsgeschwindigkeit ein Bündel von Laserstrahlen erzeugen, z.B. mit einer separaten Laserlichtquelle für jeden Laserstrahl, und mit jedem Überstreichen des Aufzeichnungsmaterials mehrere Aufzeichnungslinien der Druckform gleichzeitig belichten. Die Druckformen können auf Filmmaterial belichtet werden, so dass sogenannte Farbauszugsfilme entstehen, die anschließend mittels eines fotografischen Umkopierverfahrens zur Herstellung von Druckplatten dienen. Statt dessen können auch die Druckplatten selbst in einem Plattenbelichter oder direkt in einer digitalen Druckmaschine belichtet werden, in die eine Einheit zur Plattenbelichtung integriert ist. Das Aufzeichnungsmaterial kann sich auf einer ebenen Fläche befinden (Flachbettbelichter), in einer zylindrischen Mulde (Innentrommelbelichter) oder auf einer Trommel (Außentrommelbelichter).

Flachbettbelichter arbeiten überwiegend mit einem schnell rotierenden Polygonspiegel, dessen Spiegelflächen den Laserstrahl quer über das Aufzeichnungsmaterial lenken, während gleichzeitig das Aufzeichnungsmaterial senkrecht zur Ablenkrichtung des Laserstrahls bewegt wird. Auf diese Weise wird Aufzeichnungslinie für Aufzeichnungslinie belichtet. Da sich bei der Bewegung des Laserstrahls über das Aufzeichnungsmaterial die Länge des Lichtwegs ändert, ist eine aufwendige Abbildungsoptik erforderlich, die die dadurch bedingte Größenänderungen des Belichtungspunktes kompensiert.

Bei einem Innentrommelbelichter wird das zu belichtende Material auf der Innenfläche eines teilweise offenen Hohlzylinders montiert und mit einem Laserstrahl belichtet, der entlang der Zylinderachse auf eine Ablenkvorrichtung gerichtet wird, die den Laserstrahl senkrecht auf das Material reflektiert. Die Ablenkvorrichtung, ein Prisma oder ein Spiegel, rotiert im Betrieb mit hoher Drehzahl und wird dabei in Richtung der Zylinderachse bewegt, so dass der abgelenkte Laserstrahl kreisförmige oder schraubenförmige Aufzeichnungslinien auf dem Material beschreibt.

Bei einem Außentrommelbelichter wird das zu belichtende Material in Form von Filmen oder Druckplatten auf eine drehbar gelagerte Trommel montiert. Während die Trommel rotiert, wird ein Belichtungskopf in einem relativ kurzen Abstand axial an der Trommel entlang bewegt. Der Belichtungskopf wird in der Vorschubrichtung mittels einer Vorschubspindel bewegt, mit der er formschlüssig verbunden ist und die mit einem Vorschubantrieb in Drehbewegung versetzt wird. Der Belichtungskopf fokussiert einen oder mehrere Laserstrahlen auf die Trommeloberfläche, die die Trommeloberfläche in Form von Schraubenlinien überstreichen. Auf diese Weise werden bei jeder Trommelumdrehung eine bzw. mehrere Aufzeichnungslinien auf das Aufzeichnungsmaterial belichtet.

Um die Belichtungszeit zu verkürzen und damit die Wirtschaftlichkeit des Belichters zu erhöhen, arbeiten Außentrommelbelichter bevorzugt mit einem oder mehreren Belichtungsköpfen, die jeder ein Bündel von N Laserstrahlen mittels einer Belichtungsoptik als ein in Achsrichtung der Belichtungstrommel orientiertes lineares Array von Belichtungspunkten auf der Oberfläche des Aufzeichnungsmaterials abbilden. Wenn mehrere Belichtungsköpfe vorhanden sind, sind die Belichtungsköpfe beispielsweise auf einem Belichtungskopfträger angeordnet, der mit der Vorschubspindel verbunden ist, so dass durch die Drehbewegung der Vorschubspindel alle Belichtungsköpfe gemeinsam in Vorschubrichtung an der Belichtungstrommel entlang bewegt werden. Die Belichtungsköpfe sind in Achsrichtung der Belichtungstrommel in einem Abstand angeordnet, der ein Bruchteil der axialen Trommellänge ist, zum Beispiel bei drei Belichtungsköpfen ein Drittel der axialen Trommellänge. Um eine Druckvorlage über die gesamte Trommellänge aufzuzeichnen, braucht der Belichtungskopfträger dann mittels der Vorschubspindel nur über eine Strecke bewegt zu werden, die dem Abstand der Belichtungsköpfe entspricht. Jeder Belichtungskopf belichtet dann nur ein Aufzeichnungsband der Druckvorlage. Entsprechend kurz ist die Aufzeichnungszeit für die Druckvorlage.

Die Zahl der Laserstrahlen, die jeder Belichtungskopf auf das Aufzeichnungsmaterial abbildet, beträgt beispielsweise N=64, kann aber auch eine beliebige andere Zahl sein. Wenn die Belichtungstrommel rotiert, werden dann mehrere Gruppen von jeweils N Aufzeichnungslinien parallel belichtet, die sich schraubenförmig um die Oberfläche der Belichtungstrommel winden. Die Vorschubgeschwindigkeit der Belichtungsköpfe ist so eingestellt, dass sie sich nach einer Trommelumdrehung um eine Strecke in Achsrichtung der Trommel bewegt haben, die der Breite der N Aufzeichnungslinien entspricht. Dadurch schließen sich die bei der nächsten Trommelumdrehung zu belichtenden N Aufzeichnungslinien unmittelbar an die bei der vorangegangenen Trommelumdrehung belichteten N Aufzeichnungslinien an.

Bei einer anderen Arbeitsweise, dem sogenannten Interleave-Schreibverfahren, werden die Laserstrahlen nicht als N Belichtungspunkte mit dem Abstand von jeweils einer Aufzeichnungslinienbreite abgebildet sondern mit einem größeren Abstand, der einem Vielfachen P der Breite einer Aufzeichnungslinie entspricht. Für geeignete Verhältnisse von N und P werden bei aufeinanderfolgenden Trommelumdrehungen nach und nach die Lücken zwischen den zunächst belichteten Aufzeichnungslinien mit weiteren Aufzeichnungslinien gefüllt.

Bei der hohen Auflösung von 1000 Aufzeichnungslinien je Zentimeter beträgt der Abstand der Aufzeichnungslinien 10 $\mu$m. Dieser Abstand muss stets mit einer hohen Präzision eingehalten werden. Insbesondere müssen sich die nächsten N Aufzeichnungslinien nach einer Trommelumdrehung an die zuvor belichteten Aufzeichnungslinien lückenlos anschließen. Wenn mit mehreren Belichtungsköpfen belichtet wird, muss dieser Abstand außerdem zwischen der letzten Aufzeichnungslinie eines Belichtungskopfes und der ersten Aufzeichnungslinie des benachbarten Belichtungskopfes eingehalten werden, d.h. dort wo die durch die einzelnen Belichtungsköpfe belichteten Aufzeichnungsbänder aneinander grenzen. Wird der Linienabstand nicht genau eingehalten, entstehen störende Muster in der aufgezeichneten Druckvorlage, für die das Auge besonders empfindlich ist. Das bedeutet, dass die Vorschubstrecke der Belichtungsköpfe je Trommelumdrehung unabhängig von Temperaturveränderungen oder sonstigen Störeinflüssen immer konstant sein muss. Insbesondere beträgt die geforderte Genauigkeit für die Vorschubstrecke zur Belichtung eines Aufzeichnungsbandes $\pm$ 1 $\mu$m.

Üblicherweise wird als Antrieb für die Vorschubspindel ein Schrittmotor verwendet, und die Vorschubstrecke wird durch die Zahl der Schrittmotortakte eingestellt, die der Schrittmotor während einer bestimmten Zahl von Trommelumdrehungen erhält. Besonders die temperaturbedingte Längenänderung der Vorschubspindel bewirkt, dass die Vorschubstrecke für die so eingestellte Zahl der Schrittmotortakte schwankt. Für eine typische Vorschubstrecke von 200 mm beträgt die Längenänderung 2,2 $\mu$m je Grad Celsius, für eine Temperaturänderung von 10 Grad also bereits 22 $\mu$m. Diese Veränderung ist so groß, dass die geforderte Genauigkeit des Vorschubantriebs nicht ohne Korrekturmaßnahmen eingehalten werden kann.

Zur Verminderung dieses Problems könnte der Druckvorlagenbelichter in einem klimatisierten Raum aufgestellt werden, was aber mit Einschränkungen verbunden ist und hohe Kosten verursacht. Eine andere Möglichkeit ist, die Luft im Innenraum des Druckvorlagenbelichters zu klimatisieren. Hierbei stößt man jedoch auf verschiedene Probleme. Um ein Eindringen von Staub und Gasen von außen zu reduzieren, wird ein leichter Überdruck im Innenraum erzeugt. Das Aufzeichnungsmaterial wird mit Hilfe von Vakuum auf der Belichtungstrommel fixiert. Bei der Belichtung mit leistungsstarken Laserstrahlen entstehende Partikel und Gase müssen abgesaugt werden, um die Einheiten im Belichter, insbesondere die optischen Bauelemente, vor Verschmutzung zu schützen. Alle diese verschiedenen Luftbewegungen erhöhen die Schwierigkeiten und den Aufwand, ein wirksames von den Außenbedingungen weitgehend abgeschlossenes Klimasystem für die Luft im Innenraum des Belichters zu realisieren. Außerdem ist damit kaum die geforderte Genauigkeit einzuhalten, nämlich die Temperatur der Vorschubspindel auf ein halbes Grad konstant zu halten. Auch Verfahren, die die Temperatur der Vorschubspindel und gegebenenfalls weiterer mit dem Vorschubantrieb zusammenhängender Komponenten messen und daraus die Längenänderung der Vorschubstrecke berechnen, sind nicht genügend zuverlässig und genau.

In der Offenlegungsschrift JP 62-278360 A wird ein Verfahren beschrieben, bei dem zwei Abstandssensoren jeweils den Abstand zwischen den Sensoren und am Anfang und Ende einer Vorschubspindel angebrachten Scheiben messen. Daraus wird eine Längenänderung der Spindel ermittelt und in korrigierte Motorsteuersignale umgesetzt. In der Offenlegungsschrift JP 05-208342 A wird aus der gemessenen Längenänderung der Spindel eine lokale Variation der Längenänderung berechnet, weil das Mutternsegment, das in die Spindel eingreift, sich nur über eine Teillänge bewegt und nur dort die Spindel durch Reibung erhitzt. Dann wird eine Längenkorrektur ermittelt, die in Abhängigkeit von der Ortskoordinate variiert.

Aus der EP 0 327 929 A2 ist ein Verfahren und eine Vorrichtung zur Kalibrierung eines Aufzeichnungsgerätes bekannt, bei dem ein Aufzeichnungskopfträger axial an einer rotierenden Trommel entlanggeführt wird, auf der ein Aufzeichnungsmaterial befestigt wird.

Zum Ausgleichen von Störungen der Vorschubspindel mit der der Aufzeichnungsträger fortbewegt wird, wird durch den Aufzeichnungsträger ein Sensor entlang eines parallelen Messstabes mit einem Messraster bewegt. Durch die Positionserkennung des Aufzeichnungsträgers können lokale Positionsstörungen auf Grund der Vorschubspindel erkannt und ausgeglichen werden. Zeitliche Störungen können hierdurch nicht auf einfache Weise erkannt und ausgeglichen werden.

Die bisher bekannten Verfahren zur Korrektur der Längenänderung der Vorschubspindel sind aufwendig oder sie erreichen nicht die für die Anwendung in einem Druckvorlagenbelichter erforderliche hohe Genauigkeit.

Es ist deshalb die Aufgabe der vorliegenden Erfindung, eine kostengünstige, zuverlässige und ausreichend genaue Vorrichtung zur Messung der Längenänderung der Vorschubspindel in einem Druckvorlagenbelichter anzugeben. Eine weitere Aufgabe ist es, ein Verfahren anzugeben, mit dem die Längenänderung der Vorschubspindel gemessen und so korrigiert wird, dass bei der Aufzeichnung der Druckvorlagen die Anforderungen an die Anschlussgenauigkeit der Aufzeichnungslinien erfüllt werden. Die Aufgabe wird durch eine Referenzstrecke gelöst, die parallel zur Vorschubspindel angeordnet ist. Unmittelbar vor der Aufzeichnung einer Druckvorlage wird gemessen, wieviele Schrittmotortakte für das Durchfahren der Referenzstrecke benötigt werden. Aus dem Vergleich dieser gemessenen Taktzahl mit einem kalibrierten Wert für die Taktzahl wird dann abgeleitet, wieviele Schrittmotortakte je Trommelumdrehung bei der momentanen Längenausdehnung der Vorschubspindel gebraucht werden, damit die Aufzeichnungslinien in aufeinanderfolgenden Trommelumdrehungen exakt aneinander anschließen.

Die Erfindung wird anhand der Figuren näher beschrieben.
Es zeigen:

Fig. 1    den Aufbau eines Außentrommelbelichters,
Fig. 2    die aufgezeichnete Druckvorlage auf einer abgewickelten Trommeloberfläche,
Fig. 3    eine erste Ausführungsform der Erfindung,
Fig. 4    eine zweite Ausführungsform der Erfindung,
Fig. 5    eine dritte Ausführungsform der Erfindung, und
Fig. 6    eine vierte Ausführungsform der Erfindung.

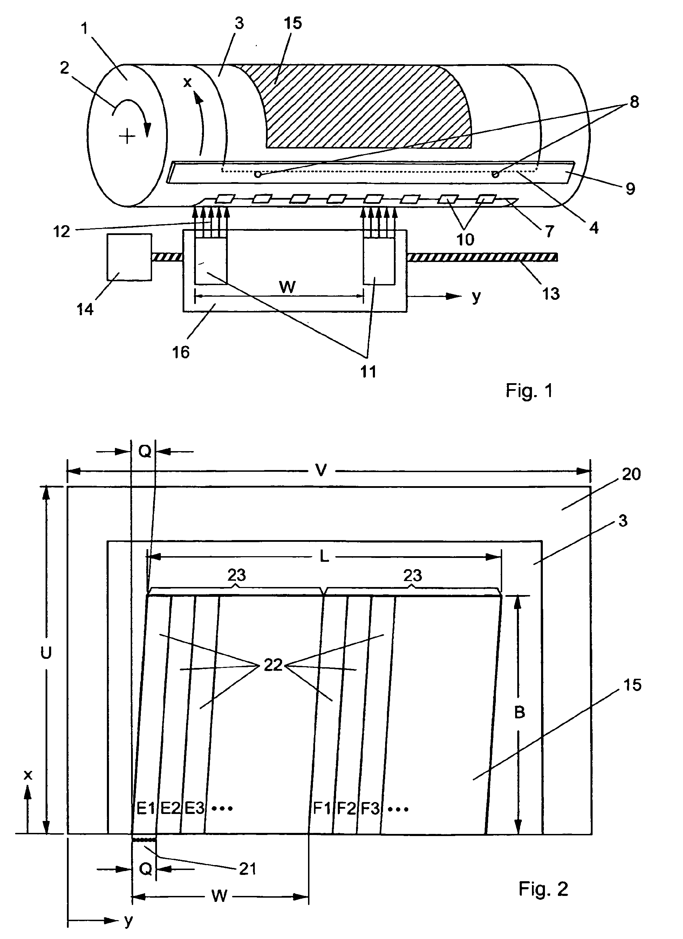

Fig. 1 zeigt schematisch den Aufbau eines Außentrommelbelichters zur Belichtung einer Druckvorlage 15 auf ein Aufzeichnungsmaterial, in diesem Beispiel eine Druckplatte 3. Eine Belichtungstrommel 1 ist drehbar gelagert und kann mit einem nicht gezeigten Rotationsantrieb in Richtung des Rotationspfeils 2 in eine gleichmäßige Rotationsbewegung versetzt werden. Auf die Belichtungstrommel 1 ist eine unbelichtete Druckplatte 3 gespannt. Die Druckplatte 3 wird so aufgespannt, dass ihre Vorderkante 4 Anlagestifte 8 berührt, die mit der Belichtungstrommel 1 fest verbunden sind und über die Oberfläche der Belichtungstrommel 1 hinausragen. Eine Klemmleiste 9 drückt die Vorderkante 4 außerdem fest auf die Oberfläche der Belichtungstrommel 1 und fixiert dadurch die Vorderkante 4 der Druckplatte 3. Die Druckplatte 3 wird flächig mittels einer in Fig. 1 nicht gezeigten Vakuumeinrichtung, die die Druckplatte 3 durch Löcher in der Trommeloberfläche ansaugt, auf der Trommeloberfläche gehalten, damit die Druckplatte 3 nicht durch die Fliehkräfte bei der Rotation der Belichtungstrommel 1 abgelöst wird. Zusätzlich wird die Hinterkante 7 der Druckplatte 3 mit Klemmstücken 10 am Abheben von der Belichtungstrommel 1 gehindert.

Ein Belichtungskopf 11 oder auch mehrere Belichtungsköpfe 11, die auf einem gemeinsamen Belichtungskopfträger 16 angeordnet sind, werden in einem relativ kurzen Abstand axial an der Belichtungstrommel 1 entlang bewegt, während die Belichtungstrommel 1 rotiert. Jeder Belichtungskopf 11 fokussiert ein Bündel von Belichtungsstrahlen, in diesem Beispiel N Laserstrahlen 12, auf die Trommeloberfläche, die die Trommeloberfläche in Form von Schraubenlinien überstreichen. Auf diese Weise werden bei jeder Trommelumdrehung eine bzw. mehrere Gruppen von N Aufzeichnungslinien in der Umfangsrichtung x auf das Aufzeichnungsmaterial belichtet. Der Belichtungskopfträger 16 wird in der Vorschubrichtung y mittels einer Vorschubspindel 13 bewegt, mit der er formschlüssig verbunden ist und die mit einem Vorschubantrieb 14 in Drehbewegung versetzt wird. Der Vorschubantrieb 14 ist ein Schrittmotor, wobei mit der Frequenz der dem Motor zugeführten Schrittmotortakte die Vorschubgeschwindigkeit sehr genau eingestellt und feinstufig verändert werden kann.

Durch die Verwendung mehrerer Belichtungsköpfe 11 wird die Produktivität des Belichters erhöht, insbesondere für die Belichtung von großformatigen Druckplatten 3, da eine Druckplatte 3 in kürzerer Zeit belichtet werden kann. In dem Beispiel von Fig. 1 sind zwei Belichtungsköpfe 11 vorhanden, die in axialer Richtung im Abstand W angeordnet sind und jeweils ein Bündel von N Laserstrahlen 12 auf die Druckplatte 3 fokussieren. Die Druckplatte 3 wird dadurch gleichzeitig mit zwei Gruppen von Aufzeichnungslinien belichtet, die im axialen Abstand W die Trommeloberfläche überstreichen. Bei zwei Belichtungsköpfen 11 entspricht der Abstand W der halben Maximallänge, die der Belichter in Vorschubrichtung aufzeichnen kann, bei drei Belichtungsköpfen 11 einem Drittel dieser Maximallänge, usw. Nachdem der Belichtungskopfträger 16 und somit alle Belichtungsköpfe 11 die Vorschubstrecke W zurückgelegt haben, ist die Belichtung der Druckplatte 3 unabhängig vom Format der aufgezeichneten Druckvorlage 15 abgeschlossen. Je mehr Belichtungsköpfe 11 vorhanden sind, desto kürzer ist die Vorschubstrecke W und damit die Belichtungszeit, die für die Aufzeichnung gebraucht wird.

Fig. 2 veranschaulicht die Aufzeichnung der Druckvorlage 15, die sich bei der Belichtung mit jeweils N Laserstrahlen 12 ergibt, auf der abgewickelten Trommeloberfläche 20 mit den Abmessungen U in Umfangsrichtung x und V in Vorschubrichtung y. Auf die Trommeloberfläche 20 ist die Druckplatte 3 aufgespannt, auf der die Druckvorlage 15 mit den Abmessungen B in Umfangsrichtung und L in Vorschubrichtung aufgezeichnet wird. Die Aufzeichnung erfolgt jeweils parallel mit N Laserstrahlen 12, die als ein in Vorschubrichtung orientiertes lineares Array von Belichtungspunkten 21 abgebildet werden. Die Zahl der Belichtungspunkte 21 in dem Array beträgt beispielsweise N=64. Wenn die Belichtungstrommel 1 rotiert, werden mit dem ersten Belichtungskopf 11 Aufzeichnungsstreifen 22 von jeweils N parallelen Aufzeichnungslinien belichtet, die in Fig. 2 mit E1, E2, E3, usw. bezeichnet sind. Mit dem zweiten Belichtungskopf 11 werden im Abstand W gleichzeitig weitere Aufzeichnungsstreifen 22 belichtet, die in Fig. 2 mit F1, F2, F3, usw. bezeichnet sind. Jeder Belichtungskopf 11 belichtet ein separates Aufzeichnungsband 23, das sich jeweils aus den Aufzeichnungsstreifen 22 zusammensetzt. Mit der Auflösung A, beispielsweise A = 100 Bildpunkte/mm, beträgt die Streifenbreite Q in mm:

$$Q = N / A \qquad\qquad (1)$$

Die Vorschubgeschwindigkeit der Belichtungsköpfe 11 ist so eingestellt, dass sie sich nach einer Trommelumdrehung um die Strecke Q in Vorschubrichtung bewegt haben, so dass sich die bei jeder Trommelumdrehung belichteten Aufzeichnungsstreifen 22 nahtlos aneinander anschließen.

Bei der hohen Auflösung von A = 100 Aufzeichnungslinien/mm beträgt der Abstand der Aufzeichnungslinien $1/A = 10\ \mu m$. Dieser Abstand muss auch eingehalten werden, wenn sich nach einer Trommelumdrehung die nächsten N Aufzeichnungslinien an die zuvor belichteten Aufzeichnungslinien anschließen, d.h. die Vorschubstrecke je Trommelumdrehung muss sehr genau den Wert Q haben. Der nominelle Abstand Wn zwischen den Belichtungsköpfen wird als Vielfaches G der Strecke Q gewählt, d.h. ein Aufzeichnungsband 23 besteht aus G Aufzeichnungsstreifen 22 und wird mit G Trommelumdrehungen belichtet.

$$Wn = G \times Q \qquad\qquad (2)$$

Da es sehr schwierig ist, den Abstand W mechanisch genau auf die Größe Wn einzustellen, wird statt dessen mit einem hier nicht näher spezifizierten Kalibrierungsverfahren einmalig bei der ersten Inbetriebnahme des Belichters der tatsächlich vorhandene Abstand W bestimmt. Im allgemeinen Fall ist der tatsächliche Abstand W kein ganzzahliges Vielfaches der Strecke Q. Dann wird bei der Belichtung des letzten Aufzeichnungsstreifens 22 des Aufzeichnungsbandes 23 nur ein Teil der Aufzeichnungslinien mit Bilddaten angesteuert und die restlichen Aufzeichnungslinien werden mit Nulldaten belegt, die keine Belichtung bewirken. Ebenso wird im ersten Aufzeichnungsstreifen 22 des folgenden Aufzeichnungsbandes 23 nur ein Teil der Aufzeichnungsinien mit Bilddaten angesteuert und die übrigen Aufzeichnungslinien werden mit Nulldaten belegt.

Am Ende der Belichtung, wenn die letzte noch belichtete Aufzeichnungslinie des ersten Aufzeichnungsbandes 23 an die erste belichtete Aufzeichnungslinie des zweiten Aufzeichnungsbandes 23 anschließt, muss der Abstand der Aufzeichnungslinien hier ebenfalls $1/A = 10\,\mu$m betragen, damit keine sichtbare Lücke oder Überlappung an der Stoßstelle zwischen den Aufzeichnungsbändern 23 entsteht. Für solche Störstellen in der aufgezeichneten Druckvorlage ist das Auge besonders empfindlich. Das bedeutet, dass die nominelle Vorschubstrecke Wn je G Trommelumdrehungen sehr genau eingehalten werden muss. Die geforderte Genauigkeit beträgt $\pm\ 1\,\mu$m.

Die Vorschubstrecke je Trommelumdrehung wird durch die Zahl der Motortakte eingestellt, die der Schrittmotor des Vorschubantriebs 14 während einer Trommelumdrehung erhält. Der Schrittmotor ist beispielsweise ein Dreiphasen-Schrittmotor, der mit 10.000 Motortakten je Spindelumdrehung angesteuert wird. Bei einer Steigung der Vorschubspindel 13 von 2 mm je Spindelumdrehung ergibt sich ein Vorschub von $0,2\,\mu$m je Motortakt. Mit einem solchen Schrittmotor kann der Vorschub genügend feinstufig eingestellt werden. Die temperaturbedingte Längenänderung der Vorschubspindel 13 bewirkt, dass die Vorschubstrecke für eine fest eingestellte Zahl der Schrittmotortakte schwankt. Für eine typische Vorschubstrecke von 200 mm beträgt die Längenänderung $2,2\,\mu$m je Grad Celsius, für eine Temperaturänderung von 10 Grad also bereits $22\,\mu$m. Diese Veränderung ist so groß, dass die geforderte Genauigkeit des Vorschubantriebs nicht ohne Korrekturmaßnahmen erreicht werden kann.

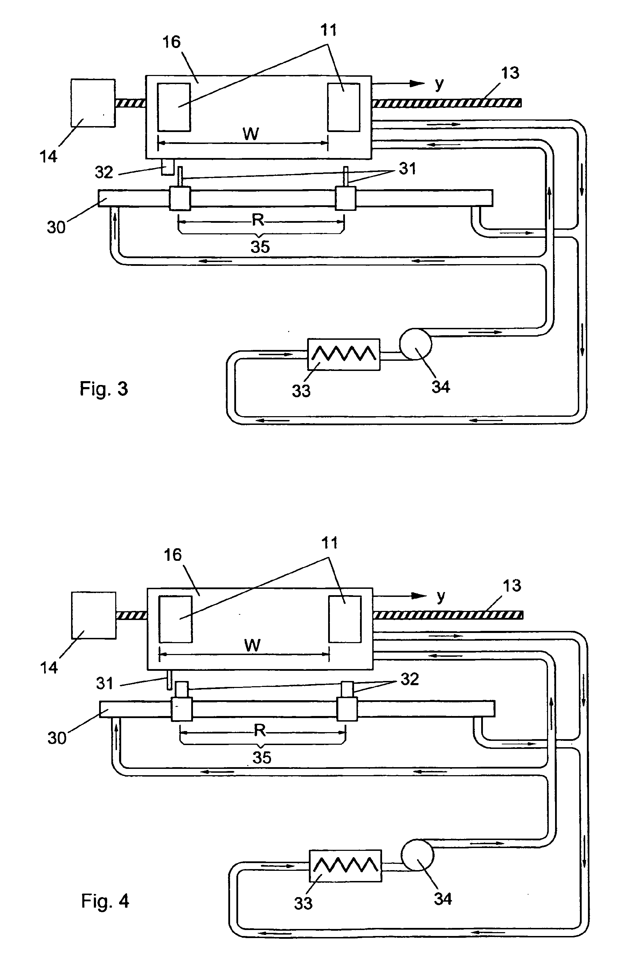

Fig. 3 zeigt eine erste Ausführungsform der erfindungsgemäßen Vorrichtung zur Messung der Längenänderung der Vorschubspindel 13. Im Wesentlichen parallel zur Vorschubspindel 13, mit der der Belichtungskopfträger 16 mittels des Vorschubantriebs 14 in der Vorschubrichtung y bewegt wird, ist ein Referenzstab 30 angeordnet. Auf dem Referenzstab 30 sind zwei Referenzmarken 31 im Abstand R so befestigt, dass sie auf dem Referenzstab 30 nicht verschiebbar sind. Der Abstand R ist vorzugsweise gleich dem Abstand W der Belichtungsköpfe 11. Die Vorrichtung kann aber auch zur Messung der Längenänderung der Vorschubspindel 13 verwendet werden, wenn die Abstände R und W nicht gleich groß sind, aber in der gleichen Größenordnung. Die Referenzmarken 31 kennzeichnen den Anfangspunkt und den Endpunkt einer Referenzstrecke 35. Am Belichtungskopfträger 16 ist ein Referenzmarkensensor 32 angebracht, mit dem erkannt wird, wann der Belichtungskopfträger 16 auf seinem Vorschubweg eine immer gleiche relative Position zu einer Referenzmarke 31 erreicht hat. Der Referenzmarkensensor 32 ist bevorzugt eine Gabellichtschranke, die ein Schaltsignal abgibt, sobald der Lichtweg der Gabellichtschranke durch eine Referenzmarke 31 unterbrochen wird. Mittels des Referenzmarkensensors 32 wird der Anfangspunkt und der Endpunkt der Referenzstrecke 35 erkannt. Zur Markierung des Anfangspunktes und des Endpunktes der Referenzstrecke 35 sowie zur Erkennung, wann diese Punkte erreicht sind, können auch alternative Sensorkonzepte eingesetzt werden, beispielsweise ein induktiver Sensor, ein kapazitiver Sensor, ein reflektiver Lichtsensor oder ein Berührungssensor. Der Anfangspunkt und der Endpunkt der Referenzstrecke 35 müssen dann in einer an das jeweilige Sensorkonzept angepassten Weise markiert werden.

Entscheidend für die Funktionsweise der erfindungsgemäßen Messvorrichtung ist, dass sich der Abstand R der Referenzmarken 31 auf dem Referenzstab 30 unabhängig von der Umgebungstemperatur nicht ändert. Um dies zu erreichen, wird der Referenzstab 30 auf eine definierte Temperatur, z.B. 25 Grad Celsius, gebracht, indem durch ihn eine temperierende Flüssigkeit geleitet wird. Dazu ist der Referenzstab 30 als Rohr ausgebildet, beispielsweise aus Metall. Die temperierende Flüssigkeit wird über einen Schlauch an einem Ende des Referenzstabs 30 eingeleitet und am anderen Ende abgeleitet. Die abgeleitete Flüssigkeit wird einem Temperieraggregat 33 zugeführt, wo sie je nach der Umgebungstemperatur aufgeheizt oder abgekühlt wird, um sie auf einer konstanten Temperatur zu halten. Dann wird sie wieder dem Referenzstab 30 zugeleitet. Mit einer Pumpe 34 wird der Kreislauf der temperierenden Flüssigkeit aufrecht erhalten. Durch eine gut wärmeleitende Verbindung zwischen dem Referenzstab 30 und den Referenzmarken 31 werden die Referenzmarken 31 ebenfalls auf einer konstanten Temperatur gehalten. Als temperierende Flüssigkeit wird vorzugsweise Wasser verwendet, das noch mit geeigneten Zusatzmitteln zum Schutz vor Korrosion und Frost gemischt werden kann.

Die temperierende Flüssigkeit wird auch dem Belichtungskopfträger 16 zugeführt, wo sie durch in Fig. 3 nicht gezeigte Kanäle im Inneren des Belichtungskopfträgers 16 geleitet wird und so den ganzen Belichtungskopfträger 16 auf eine konstante Temperatur bringt. Dadurch wird einerseits erreicht, dass sich der Abstand W der Belichtungsköpfe 11 nicht verändert, andererseits wird auch der Referenzmarkensensor 32 und die zugehörige Sensorelektronik bezüglich Temperaturänderungen stabilisiert. Dazu ist der Referenzmarkensensor 32 gut wärmeleitend mit dem Belichtungskopfträger 16 verbunden und mit einem Metallgehäuse umschlossen, das ebenfalls mit dem Belichtungskopfträger 16 verbunden ist, so dass der Referenzmarkensensor 32 auch die konstante Temperatur annimmt. Vorzugsweise hält das Temperierungssystem die Temperatur des Referenzstabs 30 und des Belichtungskopfträgers 16 mit einer Toleranz von $\pm$ 0,1 Grad Celsius konstant.

Durch verschiedene Maßnahmen in der Sensorelektronik des als Gabellichtschranke ausgebildeten Referenzmarkensensors 32 wird die Schaltgenauigkeit des Sensors erhöht. Dazu gehören eine temperaturkompensierte Stromquelle für die Leuchtdiode in der Gabellichtschranke, ein Spannungsregler für die Versorgungsspannung, ein Signalverstärker mit einem Schmitt-Trigger-Ausgang, eine sehr kleine Apertur des Lichtdetektors. Alle Bauteile befinden sich in Form einer Hybridschaltung auf einem Keramikplättchen. Bei dessen Herstellung werden aufgedampfte Widerstände durch Lasertrimmung justiert, damit leichte Bauteilestreuungen ausgeglichen werden und die gewünschten Arbeitspunkte der Bauteilekennlinien exakt eingehalten werden. Die Referenzmarken 31 sind vorzugsweise als stabile Frästeile mit einer geschliffenen Messerkante ausgebildet, um eine thermische Verformung zu verhindern. Durch alle diese Maßnahmen in Verbindung mit der Temperierung von Referenzstab 30, Referenzmarken 31 und Referenzmarkensensor 32 wird beim Eintritt einer Referenzmarke 31 in die Gabellichtschranke eine Schaltgenauigkeit mit einer Toleranz von unter 1 $\mu$m erreicht.

Im folgenden wird das erfindungsgemäße Verfahren beschrieben, mit dem die temperaturbedingte Längenänderung der Vorschubspindel 13 mittels der beschriebenen Vorrichtung gemessen wird und wie auf der Basis dieser Messung die Längenänderung bei der Aufzeichnung der Druckvorlage 15 korrigiert wird. Die Messung teilt sich in zwei Phasen auf, eine Kalibrierungsphase und eine Betriebsphase. Die Kalibrierungsphase wird bei der ersten Inbetriebnahme des Druckvorlagenbelichters im Herstellerwerk durchgeführt bzw. nach dem Auswechseln eines Belichtungskopfes 11 oder einer anderen Reparatur, die eine erneute Kalibrierung erforderlich macht. Die Betriebsphase betrifft eine Messung während des laufenden Betriebs unmittelbar vor jeder Belichtung einer neuen Druckvorlage 15.

In der Kalibrierungsphase werden verschiedene Einstellungen und Justierungen des Druckvorlagenbelichters durchgeführt. Dazu gehört auch die Einstellung des Linienanschlusses der Aufzeichnungslinien von Trommelumdrehung zu Trommelumdrehung und an der Stoßstelle zwischen den Aufzeichnungsbändern 23. Während der Einstellung möge die Umgebungstemperatur einen beliebigen Wert $T_0$ haben. Bestimmte Testvorlagen werden belichtet, auf störende Muster untersucht und visuell bewertet, wobei die Zahl der Schrittmotortakte je Trommelumdrehung solange variiert wird, bis das Belichtungsergebnis bezüglich des Linienanschlusses optimal ist. Die optimale Zahl $K_0$ der Schrittmotortakte je Trommelumdrehung bei der Temperatur $T_0$ wird als Kalibrierungswert im Druckvorlagenbelichter gespeichert. Unmittelbar vor jeder Belichtung wird mit der eingestellten Taktzahl des Vorschubs die Referenzstrecke 35 zwischen den Referenzmarken 31 durchfahren und ermittelt, wieviele Schrittmotortakte insgesamt für diese Strecke erforderlich sind. Die Zahl $M_0$ der dafür benötigten Motortakte, die zu der optimalen Zahl $K_0$ der Schrittmotortakte je Trommelumdrehung gehört, wird als ein weiterer Kalibrierungswert im Druckvorlagenbelichter gespeichert. Während der Einstellung des Linienanschlusses und während der Messung der Referenzstrecke 35 ist das Temperierungssystem eingeschaltet und hält die Temperatur des Belichtungskopfträgers 16 und des Referenzstabs 30 konstant. Dadurch ist auch die Referenzstrecke 35 auf 1 $\mu$m konstant. Aus den beiden Kalibrierungswerten $K_0$ und $M_0$ ergibt sich die Zahl $G_0$ der Trommelumdrehungen zwischen den Endpunkten der Referenzstrecke 35.

$$G_0 = M_0 / K_0 \qquad\qquad (3)$$

Wenn N Aufzeichnungslinien je Trommelumdrehung belichtet werden, beträgt die Zahl $H_0$ der Aufzeichnungslinien auf der Referenzstrecke 35, bei der der zuvor eingestellte optimale Linienanschluss der Aufzeichnungslinien erreicht wird:

$$H_0 = N \times G_0 \qquad\qquad (4)$$

Aufgabe der Korrektur der Längenänderung der Vorschubspindel ist es, die Zahl $G_0$ der Trommelumdrehungen auf der Referenzstrecke 35 bzw. die Zahl $H_0$ der Aufzeichnungslinien auf der Referenzstrecke 35 bei einer geänderten Umgebungstemperatur konstant zu halten.

Im laufenden Betrieb des Belichters möge die aktuelle Umgebungstemperatur den Wert $T_x$ haben. Wenn $T_x$ beispielsweise höher als $T_0$ ist, hat sich die Vorschubspindel ausgedehnt und bei unveränderter Taktzahl $K_0$ je Trommelumdrehung würde der Vorschub schneller laufen. Unmittelbar vor der Belichtung einer neuen Druckvorlage wird nun die Referenzstrecke 35 zwischen den Referenzmarken 31 durchfahren und ermittelt, wieviele Schrittmotortakte $M_x$ jetzt insgesamt für diese Strecke erforderlich sind. Das Temperierungssystem für den Belichtungskopfträger 16 und für den Referenzstab 30 ist wiederum eingeschaltet. Da in dem angenommenen Beispiel der Vorschub schneller läuft, wird die Zahl $M_x$ der nun für die Referenzstrecke 35 benötigten Motortakte geringer sein als der Kalibrierungswert $M_0$. Die Zahl

der Trommelumdrehungen auf der Referenzstrecke 35 würde nur noch

$$G_x = G_0 \times M_x / M_0 \qquad\qquad (5)$$

betragen. Ein Aufzeichnungsband 23, das mit G Trommelumdrehungen belichtet wird, würde dann breiter werden und die Aufzeichnungsbänder 23 würden sich überlappen. Die Korrektur erfolgt durch eine Veränderung der Zahl der Motortakte je Trommelumdrehung um den Faktor $M_x / M_0$. Für die korrigierte Zahl $K_k$ der Motortakte je Trommelumdrehung ergibt sich dann:

$$K_k = K_0 \times M_x / M_0 \qquad\qquad (6)$$

Mit der korrigierten Zahl $K_k$ der Motortakte ergibt sich die Zahl $G_k$ der Trommelumdrehungen auf der Referenzstrecke 35 zu:

$$G_k = M_x / K_k = (M_x \times M_0) / (K_0 \times M_x) = M_0 / K_0 = G_0 \qquad (7)$$

Nach der Korrektur hat also die Zahl der Trommelumdrehungen und damit die Zahl der Aufzeichnungslinien auf der Referenzstrecke 35 bei der geänderten Temperatur $T_x$ den gleichen Wert, der bei der Kalibrierung des Druckvorlagenbelichters für den optimalen Linienanschluss der Aufzeichnungslinien eingestellt wurde.

Obwohl das erfindungsgemäße Verfahren für den Fall beschrieben wurde, dass die Aufzeichnungslinien unmittelbar nebeneinander belichtet werden, d.h. mit einem Abstand zwischen den Aufzeichnungslinien, der der Auflösung A entspricht, kann das Verfahren auch für das sogenannte Interleave-Schreibverfahren angewendet werden. Beim Interleave-Schreibverfahren haben die Aufzeichnungslinien einen größeren Abstand als es der Auflösung A entspricht. Bei bestimmten Kombinationen von Linienzahl N und Linienabstand werden in aufeinanderfolgenden Trommelumdrehungen nach und nach die Lücken zwischen den zunächst belichteten Aufzeichnungslinien mit weiteren Aufzeichnungslinien gefüllt, so dass schließlich doch eine lückenlose Belichtung des Aufzeichnungsmaterials erfolgt.

Fig. 4 zeigt eine zweite Ausführungsform der erfindungsgemäßen Vorrichtung. Am Belichtungskopfträger (16) ist eine Referenzmarke (31) angebracht, und auf dem Referenzstab (30) sind zwei Referenzmarkensensoren (32) befestigt, zwischen denen die Referenzstrecke (35) aufgepannt ist.

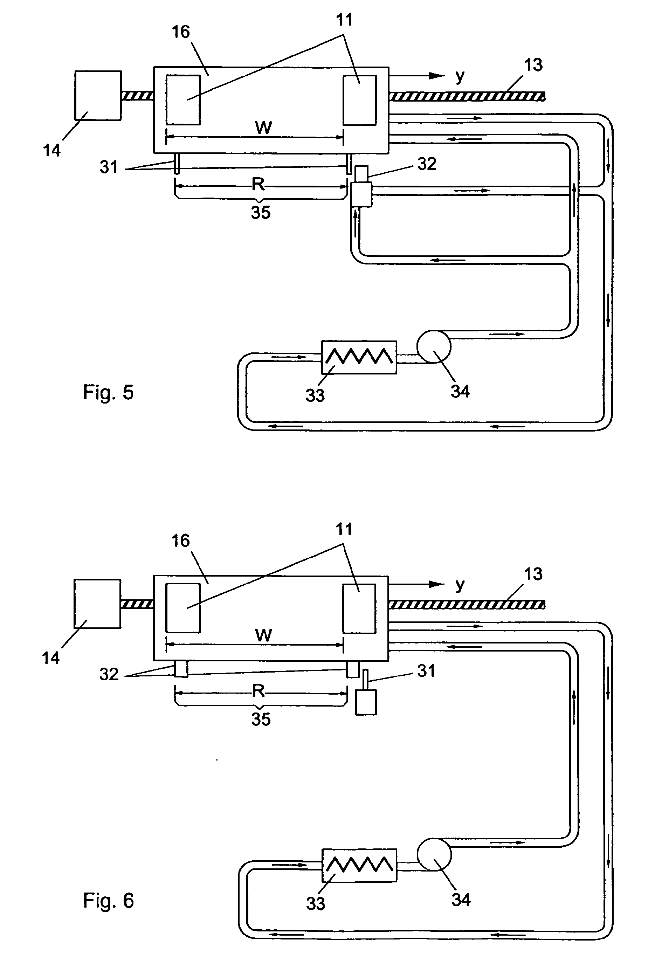

Eine dritte Ausführungsform ist in Fig. 5 gezeigt, bei der am Belichtungskopfträger (16) zwei Referenzmarken (31) angebracht sind, die die Referenzstrecke (35) definieren. Da der Belichtungskopfträger (16) durch das Temperierungssystem auf einer konstanten Temperatur gehalten wird, bleibt die Referenzstrecke (35) auch bei dieser Anordnung konstant. Ein Referenzmarkensensor (32), der ebenfalls auf einer konstanten Temperatur gehalten wird, ist fest mit der Maschinenbasis (in Fig. 5 nicht gezeigt) des Belichters verbunden. Bei dieser Ausführungsform wird kein Referenzstab benötigt.

Fig. 6 zeigt eine vierte Ausführungsform, bei der am Belichtungskopfträger (16) zwei Referenzmarkensensoren (32) angebracht sind, die die Referenzstrecke (35) definieren, und eine Referenzmarke (31) fest mit der Maschinenbasis (in Fig. 6 nicht gezeigt) des Belichters verbunden ist. Bei dieser Ausführungsform wird kein Referenzstab und keine Temperierung der Referenzmarke (31) benötigt.

**Bezugszeichenliste**

| | |
|---|---|
| 1 | Belichtungstrommel |
| 2 | Rotationspfeil |
| 3 | Druckplatte |
| 4 | Vorderkante |
| 7 | Hinterkante |
| 8 | Anlagestift |
| 9 | Klemmleiste |
| 10 | Klemmstück |

| | |
|---|---|
| 11 | Belichtungskopf |
| 12 | Laserstrahl |
| 13 | Vorschubspindel |
| 14 | Vorschubantrieb |
| 15 | Druckvorlage |
| 16 | Belichtungskopfträger |
| 20 | Trommeloberfläche |
| 21 | Array von Belichtungspunkten |
| 22 | Aufzeichnungsstreifen |
| 23 | Aufzeichnungsband |
| 30 | Referenzstab |
| 31 | Referenzmarke |
| 32 | Referenzmarkensensor |
| 33 | Temperieraggregat |
| 34 | Pumpe |
| 35 | Referenzstrecke |

**Patentansprüche**

1. Verfahren zur Messung der Längenänderung einer Vorschubspindel (13) in einem Belichter zur Aufzeichnung von Druckvorlagen (15), wobei

   - ein Aufzeichnungsmaterial auf einer Belichtungstrommel (1) befestigt wird,
   - ein Belichtungskopfträger (16) mittels eines Schrittmotors in einem Vorschubantrieb (14) und der Vorschubspindel (13) in einer Vorschubrichtung axial an der Belichtungstrommel (1) entlang bewegt wird,
   - der Belichtungskopfträger (16) mindestens einen Belichtungskopf (11) trägt, mit dem Belichtungsstrahlen (12) auf das Aufzeichnungsmaterial fokussiert werden,
   **dadurch gekennzeichnet, dass**
   - während einer Grundeinstellung des Vorschubantriebs (14) eine optimale Zahl $K_0$ von Schrittmotortakten je Umdrehung der Belichtungstrommel (1) eingestellt wird und die Zahl $M_0$ der Schrittmotortakte bestimmt wird, die der Belichtungskopfträger (16) zum Durchfahren einer zur Vorschubrichtung im Wesentlichen parallelen Referenzstrecke (35) benötigt, und
   - unmittelbar vor der Aufzeichnung einer Druckvorlage (15) die Zahl $M_x$ der Schrittmotortakte bestimmt wird, die der Belichtungskopfträger (16) zum Durchfahren der Referenzstrecke (35) benötigt.

2. Verfahren nach Anspruch 1,
   **dadurch gekennzeichnet, dass**
   für die Aufzeichnung der Druckvorlage (15) eine korrigierte Zahl $K_k$ von Schrittmotortakten je Umdrehung der Belichtungstrommel (1) nach der Beziehung

$$K_k = K_0 \times M_x / M_0$$

   eingestellt wird.

3. Verfahren nach Anspruch 1 oder 2,
   **dadurch gekennzeichnet, dass**
   die Referenzstrecke (35) während der Grundeinstellung und unmittelbar vor und während der Aufzeichnung der Druckvorlage (15) dieselbe Länge hat.

4. Verfahren nach einem der Ansprüche 1 bis 3,
   **dadurch gekennzeichnet, dass**
   der Anfangspunkt und der Endpunkt der Referenzstrecke (35) mit mindestens einem Sensor (32) erkannt wird.

5. Verfahren nach einem der Ansprüche 1 bis 4,
   **dadurch gekennzeichnet, dass**

- der Belichtungskopfträger (16) mehrere Belichtungsköpfe (11) trägt, die zueinander einen Abstand W haben, rund
- die Länge der Referenzstrecke (35) im Wesentlichen gleich dem Abstand W ist.

6. Vorrichtung zur Messung der Längenänderung einer Vorschubspindel (13) in einem Belichter zur Aufzeichnung von Druckvorlagen (15), wobei

- der Belichter eine Belichtungstrommel (1) zur Aufnahme eines Aufzeichnungsmaterials enthält,
- der Belichter einen Belichtungskopfträger (16) enthält, der mittels eines Schrittmotors in einem Vorschubantrieb (14) und der Vorschubspindel (13) in einer Vorschubrichtung axial an der Belichtungstrommel (1) entlang bewegt wird,
- der Belichtungskopfträger (16) mindestens einen Belichtungskopf (11) trägt, der Belichtungsstrahlen (12) auf das Aufzeichnungsmaterial fokussiert,
- eine Referenzstrecke (35) im Wesentlichen parallel zur Vorschubrichtung angeordnet ist,
**dadurch gekennzeichnet, dass**
- eine Zähleinrichtung zur Bestimmung der Zahl der Schrittmotortakte vorgesehen ist, die der Belichtungskopfträger (16) zum Durchfahren der Referenzstrecke (35) benötigt.

7. Vorrichtung nach Anspruch 6, **gekennzeichnet durch**

- zwei Referenzmarken (31), die auf einem Referenzstab (30) befestigt sind und mit denen der Anfangspunkt und der Endpunkt der Referenzstrecke (35) **gekennzeichnet** ist, und
- einen Referenzmarkensensor (32), der an dem Belichtungskopfträger (16) befestigt ist und mit dem die Referenzmarken (31) erkannt werden.

8. Vorrichtung nach Anspruch 6, **gekennzeichnet durch**

- eine Referenzmarke (31), die an dem Belichtungskopfträger (16) befestigt ist, und
- zwei auf einem Referenzstab (30) befestigte Referenzmarkensensoren (32), mit denen der Anfangspunkt und der Endpunkt der Referenzstrecke (35) **gekennzeichnet** ist, und mit denen die Referenzmarke (31) erkannt wird.

9. Vorrichtung nach Anspruch 6, **gekennzeichnet durch**

- zwei Referenzmarken (31), die an dem Belichtungskopfträger (16) befestigt sind und mit denen der Anfangspunkt und der Endpunkt der Referenzstrecke (35) **gekennzeichnet** ist, und
- einen Referenzmarkensensor (32), der fest mit dem Belichter verbunden ist und mit dem die Referenzmarken (31) erkannt werden.

10. Vorrichtung nach Anspruch 6, **gekennzeichnet durch**

- eine Referenzmarke (31), die fest mit dem Belichter verbunden ist, und
- zwei an dem Belichtungskopfträger (16) befestigte Referenzmarkensensoren (32), mit denen der Anfangspunkt und der Endpunkt der Referenzstrecke (35) **gekennzeichnet** ist, und mit denen die Referenzmarke (31) erkannt wird.

11. Vorrichtung nach einem der Ansprüche 6 bis 10, **dadurch gekennzeichnet, dass** der Referenzmarkensensor (32) eine Gabellichtschranke ist.

12. Vorrichtung nach einem der Ansprüche 6 bis 11, **gekennzeichnet durch** ein Temperierungssystem, das den Referenzstab (30) auf einer konstanten Temperatur hält.

13. Vorrichtung nach einem der Ansprüche 6 bis 11, **gekennzeichnet durch** ein Temperierungssystem, das den Belichtungskopfträger (16) auf einer konstanten Temperatur hält.

**Claims**

1. Method of measuring the change of length of a feed screw (13) in an exposure unit for recording original documents (15), wherein

- a recording material is fixed to an exposure drum (1),
- an exposure head support (16) is moved axially along the exposure drum (1) in a feed direction by means of a stepping motor in a feed drive (14) and the feed screw (13)
- the exposure head support (16) carries at least one exposure head (11) which focuses exposure beams (12) on the recording material,

**characterized by** the fact

- that during a basic setting of the feed drive (14), an optimum number $K_0$ of stepping motor cycles per revolution of the exposure drum (1) is set and the number $M_0$ of stepping motor cycles is determined that the exposure head support (16) needs to move through a distance of reference (35) essentially parallel with the feed direction, and
- that immediately prior to a recording of an original document (15), the number $M_X$ of stepping motor cycles is determined which the exposure head support (16) needs to move through the distance of reference (35).

2. Method according to Claim 1,
   **characterized by**
   the fact that for the recording of the original document (15), a corrected number $K_k$ of stepping motor cycles per revolution of the exposure drum (1) is set in accordance with the equation.

$$K_k = K_o \times M_x / M_o.$$

3. Method according to Claim 1 or 2,
   **characterized by**
   the fact that the distance of reference (35) has the same length during the basic setting and immediately prior to and during the recording of the original document (15).

4. Method according to any one of claims 1 to 3,
   **characterized by**
   the fact that the starting point and the end point of the distance of reference (35) is detected by at least one sensor (32).

5. Method according to any one of claims 1 to 4,
   **characterized by**
   the fact

   - that the exposure head support (16) carries multiple exposure heads (11) which are at a distance W from each other, and
   - that the length of the distance of reference (35) is essentially identical with the distance W.

6. Device for measuring the change of length of a feed screw (13) in an exposure device for recording original documents (15), wherein

   - the exposure device includes an exposure drum (1) for receiving a recording material,
   - the exposure device includes an exposure head support (16) which is moved axially along the exposure drum (1) in a feed direction by means of a stepping motor in a feed drive (14) and the feed screw (13),
   - the exposure head support (16) carries at least one exposure head (11) which focuses the exposure beams (12) onto the recording material,
   - a distance of reference (35) is arranged essentially parallel with the feed direction,
   **characterized by** the fact
   - that a counter is provided for counting the number of stepping motor cycles which the exposure head carrier (16) needs to move through the distance of reference (35).

7. Device according to Claim 6, **characterized by**

   - two reference marks (31) which are attached to a reference rod (30) and indicate the start point and the end point of the distance of reference (35), and
- a reference mark sensor (32), which is attached to the exposure head support (16) and recognizes the reference marks (31).

8. Device according to Claim 6, **characterized by**

- a reference mark (31) which is attached to the exposure head support (16), and
- two reference mark sensors (32), which are attached to a reference stick (30), indicate the start point and the end point of the distance of reference (35), and recognize the reference mark (31).

9. Device according to Claim 6, **characterized by**

- two reference marks (31) which are attached to the exposure head support (16) and indicate the start point and the end point of the distance of reference (35), and
- a reference mark sensor (32) which is firmly connected to the exposure device and recognizes the reference marks (31).

10. Device according to Claim 6, **characterized by**

- a reference mark (31) which is firmly connected to the exposure device, and
- two reference mark sensors (32), which are attached to the exposure head support (16), indicate the start point and the end point of the distance of reference (35), and recognize the reference mark (31).

11. Device according to any one of Claims 6 to 10, **characterized by** the fact that the reference mark sensor (32) is a fork light barrier.

12. Device according to any one of Claims 6 to 11, **characterized by** a temperature control system that keeps the temperature of the reference rod (30) constant.

13. Device according to any one of Claims 6 to 11, **characterized by** a temperature control system that keeps the temperature of the exposure head support (16) constant.

**Revendications**

1. Procédé pour la mesure du changement de longueur d'une broche d'avance (13) dans un dispositif d'exposition de clichés (15),

- un matériel d'enregistrement étant fixé sur un tambour d'exposition (1),
- un support de tête d'exposition (16) étant déplacé au moyen d'un moteur pas à pas dans un entraînement d'avance (14) et de la broche d'avance (13) dans une direction d'avance axialement le long du tambour d'exposition (1),
- le support de tête d'exposition (16) portant au moins une tête d'exposition (11) avec lequel des rayons d'exposition (12) peuvent être focalisés sur le matériau d'enregistrement, **caractérisé en ce que**
- pendant un réglage de base de l'entraînement d'avance (14), un chiffre optimal $K_0$ de cadences de moteur pas à pas est réglé et le chiffre $M_0$ des cadences du moteur pas à pas est défini par rotation du tambour d'exposition (1) dont a besoin le support de tête d'exposition (16) pour traverser un trajet de référence (35) sensiblement parallèle à la direction d'avance, et
- juste avant l'enregistrement d'un cliché (15), le chiffre $M_x$ des cadences de moteur pas à pas est défini dont a besoin le support de tête d'exposition (16) pour la traversée du trajet de référence (35).

2. Procédé selon la revendication 1, **caractérisé en ce que** pour l'enregistrement du cliché (15) , un chiffre corrigé $K_k$ de cadences de moteur pas à pas est réglé par rotation du tambour d'exposition (1) selon la relation

$$K_k = K_0 \times M_x / M_0.$$

**3.** Procédé selon la revendication 1 ou 2, **caractérisé en ce que** le trajet de référence (35) a la même longueur pendant le réglage de base et juste avant et pendant l'enregistrement du cliché (15).

**4.** Procédé selon l'une des revendications 1 à 3, **caractérisé en ce que** le point de départ et le point d'arrivée du trajet de référence (35) sont détectés avec au moins un capteur (32).

**5.** Procédé selon l'une des revendications 1 à 4, **caractérisé en ce que**

- le support de tête d'exposition (16) porte plusieurs têtes d'exposition (11) qui ont une distance W entre elles, et
- la longueur du trajet de référence (35) est sensiblement identique à la distance W.

**6.** Dispositif pour la mesure du changement de longueur d'une broche d'avance (13) dans une imageuse pour l'enregistrement de clichés (15),

- l'imageuse comprenant un tambour d'exposition (1) pour la réception d'un matériau d'enregistrement,
- l'imageuse comprend un support de tête d'exposition (16) qui est déplacé au moyen d'un moteur pas à pas dans un entraînement d'avance (14) et de la broche d'avance (13) dans une direction d'avance axialement le long du tambour d'exposition (1),
- le support de tête d'exposition (16) portant au moins une tête d'exposition (11) avec lequel des rayons d'exposition (12) peuvent être focalisés sur le matériau d'enregistrement,
- un trajet de référence (35) étant disposé sensiblement parallèlement à la direction d'avance,
**caractérisé en ce qu'**
- il est prévu un dispositif de comptage pour déterminer le nombre des cadences de moteur pas à pas dont à besoin le support de tête d'exposition (16) pour la traversée du trajet de référence (35).

**7.** Dispositif selon la revendication 6, **caractérisé par**

- deux marques de référence (31) qui sont fixées sur une barre de référence (30) et qui caractérisent le point de début et le point de fin du trajet de référence (35), et
- un capteur de marque de référence (32) qui est fixé sur le support de tête d'exposition (16) et qui détecte les marques de référence (31).

**8.** Dispositif selon la revendication 6, **caractérisé par**

- une marque de référence (31) qui est fixée sur le support de tête d'exposition (16), et
- deux capteurs de marques de référence (32) fixés sur une barre de référence (30), avec lesquels le point de début et le point de fin du trajet de référence (35) sont **caractérisés** et qui détecte la marque de référence (31).

**9.** Dispositif selon la revendication 6, **caractérisé par**

- deux marques de référence (31) qui sont fixées sur le support de tête d'exposition (16) et qui caractérisent le point de début et le point de fin du trajet de référence (35), et
- un capteur de marques de référence (32) qui est fixé fixement sur l'imageuse et qui détecte les marques de référence (31).

**10.** Dispositif selon la revendication 6, **caractérisé par**

- une marque de référence (31) qui est reliée fixement à l'imageuse et
- deux capteurs de marques de référence (32) fixés sur le support de tête d'exposition (16) qui caractérisent le point de début et le point de fin du trajet de référence (35), et qui détectent les marques de référence (31).

**11.** Dispositif selon l'une des revendications 6 à 10, **caractérisé en ce que** le capteur de référence de marque (32) est une fourche optique.

**12.** Dispositif selon l'une des revendications 6 à 11, **caractérisé en ce qu'**un système de maintien de température qui maintient la barre de référence (30) à une température constante.

**13.** Dispositif selon l'une des revendications 6 à 11, **caractérisé en ce qu'**un système de maintien de température qui maintient le support de tête d'exposition (16) à une température constante.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 62278360 A
- JP 5208342 A
- EP 0327929 A2